# EUROPEAN PATENT APPLICATION

(11) **EP 4 711 599 A1**
(43) Date of publication of application: **18.03.2026**
(21) Application number: 25201355.2
(22) Date of filing: 10.09.2025
(51) Int. Cl.: F02C 7/18, F01D 25/26, F02C 7/22, F23R 3/28

(54) **FUEL NOZZLE THERMAL MANAGEMENT SYSTEM**

(30) Priority: 13.09.2024 US 202418884816
(71) Applicant: RTX Corporation, Farmington, CT 06032 (US)
(72) Inventor: Breault, Andrew E., Bolton, 06043 (US); Morton, Jeffrey T., Glastonbury, 06033 (US)
(74) Representative: Schmitt-Nilson Schraud Waibel Wohlfrom Patentanwälte Partnerschaft mbB

(57) **Abstract**

A fuel nozzle thermal management system including a fan fluidly coupled with at least one of a fuel nozzle, a fuel manifold, an external fuel supply, and fuel drain lines proximate a combustor.

## Description

The present disclosure is directed to the improved fuel nozzle thermal management system.

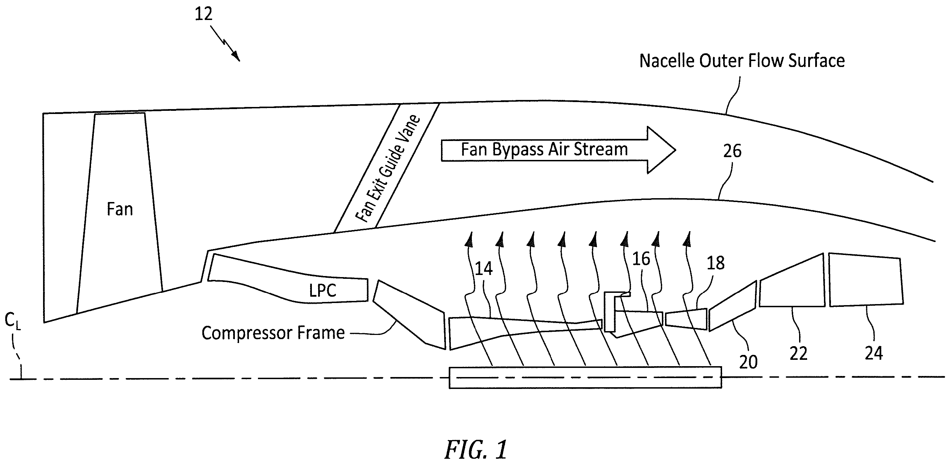

During normal operations, temperatures of gas turbine engine components are maintained within allowable limits by a plurality of cooling processes that transfer heat from the components to one or more heat sinks. When the engine is shut down, most cooling systems no longer operate. As seen in Fig. 1, residual heat in certain engine components can be transferred (i.e.; "soakback") from the bore area, gas path, and cases and subsequently increase the temperature of other engine components beyond allowable limits.

A particular concern is the formation of carbon (or "coke") deposits in fuel carrying components including fuel nozzles when a hydrocarbon fuel (liquid or gas) is exposed to high temperatures in the presence of oxygen.

Coking can occur in fuel nozzles, fuel tubes, oil tubes, and drain tubes. Coking in the fuel nozzle can cause costly outcomes such as engine start issues, inefficient consumption and non-uniform combustion leading to accelerated part distress and engine in-flight shutdowns.

In accordance with the present disclosure, there is provided a fuel nozzle thermal management system comprising a fan fluidly coupled with at least one of a fuel nozzle, a fuel manifold, an external fuel supply, and a fuel drain line proximate a combustor.

Particular embodiments further may include at least one, or a plurality of, the following optional features, alone or in combination with each other:

A further embodiment of any of the foregoing embodiments may additionally and/or alternatively include the fuel nozzle thermal management system further comprising a conditioning duct proximate the combustor, wherein the conditioning duct is configured to direct a cooling air fluidly coupled with the at least one of the fuel nozzle, the fuel manifold, the external fuel supply, and the fuel drain line proximate the combustor.

A further embodiment of any of the foregoing embodiments may additionally and/or alternatively include the conditioning duct is configured to encircle the combustor.

A further embodiment of any of the foregoing embodiments may additionally and/or alternatively include the conditioning duct is configured as a circumferential conduit with at least one jet configured to direct the cooling air toward at least one of the fuel nozzles, the combustor, the fuel manifold, the external fuel supply, or the fuel drain line.

A further embodiment of any of the foregoing embodiments may additionally and/or alternatively include the conditioning duct is configured integrated into a nacelle with at least one jet configured to direct the cooling air toward at least one of the fuel nozzles, the combustor, the fuel manifold, the external fuel supply, or the fuel drain line.

A further embodiment of any of the foregoing embodiments may additionally and/or alternatively include the conditioning duct partially encircles the combustor.

A further embodiment of any of the foregoing embodiments may additionally and/or alternatively include the conditioning duct is configured to be supplied with the cooling air by at least one of an electrically driven fan or compressor during post shut down operation or passively fed using ram air during engine operation.

In accordance with the present disclosure, there is provided a fuel nozzle thermal management system comprising a fan fluidly coupled with at least one of a fuel nozzle, a fuel manifold, an external fuel supply, and a fuel drain line proximate a combustor; and a conditioning duct proximate the combustor, wherein the conditioning duct is fluidly coupled with the fan, the conditioning duct is configured to direct a cooling air fluidly coupled with the at least one of the fuel nozzle, the fuel manifold, the external fuel supply, and the fuel drain line proximate the combustor.

Particular embodiments further may include at least one, or a plurality of, the following optional features, alone or in combination with each other:

A further embodiment of any of the foregoing embodiments may additionally and/or alternatively include the conditioning duct encircles the combustor.

A further embodiment of any of the foregoing embodiments may additionally and/or alternatively include the conditioning duct partially encircles the combustor.

A further embodiment of any of the foregoing embodiments may additionally and/or alternatively include the conditioning duct comprises an air inlet fluidly coupled with at least one air outlet.

A further embodiment of any of the foregoing embodiments may additionally and/or alternatively include the conditioning duct is configured as a circumferential conduit with at least one jet configured to direct the cooling air toward at least one of the fuel nozzles, the combustor, the fuel manifold, the external fuel supply, or the fuel drain line.

A further embodiment of any of the foregoing embodiments may additionally and/or alternatively include the conditioning duct is configured integrated into a nacelle with at least one jet configured to direct the cooling air toward at least one of the fuel nozzles, the combustor, the fuel manifold, the external fuel supply, or the fuel drain line.

In accordance with the present disclosure, there is provided a process for fuel nozzle thermal management comprising fluidly coupling a fan with at least one of a fuel nozzle, a fuel manifold, an external fuel supply, and a fuel drain line proximate a combustor; fluidly coupling a conditioning duct proximate the combustor; and configuring the conditioning duct to direct a cooling air fluidly coupled with the at least one of the fuel nozzle, the fuel manifold, the external fuel supply, and the fuel drain line proximate the combustor.

Particular embodiments further may include at least one, or a plurality of, the following optional features, alone or in combination with each other:

A further embodiment of any of the foregoing embodiments may additionally and/or alternatively include the process further comprising encircling the combustor with the conditioning duct.

A further embodiment of any of the foregoing embodiments may additionally and/or alternatively include the process further comprising partially encircling the combustor with the conditioning duct.

A further embodiment of any of the foregoing embodiments may additionally and/or alternatively include the process further comprising forming an air inlet in the conditioning duct; and fluidly coupling the air inlet with at least one air outlet.

A further embodiment of any of the foregoing embodiments may additionally and/or alternatively include the process further comprising fluidly coupling the air inlet with a source of air taken from at least one of an open environment outboard of a core compartment or taken from a fan bypass air stream external to a nacelle inner flow surface.

A further embodiment of any of the foregoing embodiments may additionally and/or alternatively include the process further comprising configuring the conditioning duct as a circumferential conduit with at least one jet; and directing the cooling air with the jets toward at least one of the fuel nozzles, the combustor, the fuel manifold, the external fuel supply, or the fuel drain line.

A further embodiment of any of the foregoing embodiments may additionally and/or alternatively include the process further comprising configuring the conditioning duct integrated into a nacelle with at least one jet; and directing the cooling air toward at least one of the fuel nozzles, the combustor, the fuel manifold, the external fuel supply, or the fuel drain line.

Other details of the fuel nozzle thermal management system are set forth in the following detailed description and the accompanying drawings wherein like reference numerals depict like elements.
Fig. 1 is a cross-sectional view of a schematic representation of an exemplary gas turbine engine post-shutdown.
Fig. 2 is a cross-sectional view schematic representation of an exemplary fuel nozzle thermal management system 10.
Fig. 3 is a section 3-3 view schematic representation of an exemplary fuel nozzle thermal management system.
Fig. 4 is a section 3-3 view schematic representation of an exemplary fuel nozzle thermal management system.
Fig. 5 is a section 3-3 view schematic representation of an exemplary fuel nozzle thermal management system.
Fig. 6 is a section 3-3 view schematic representation of an exemplary fuel nozzle thermal management system.

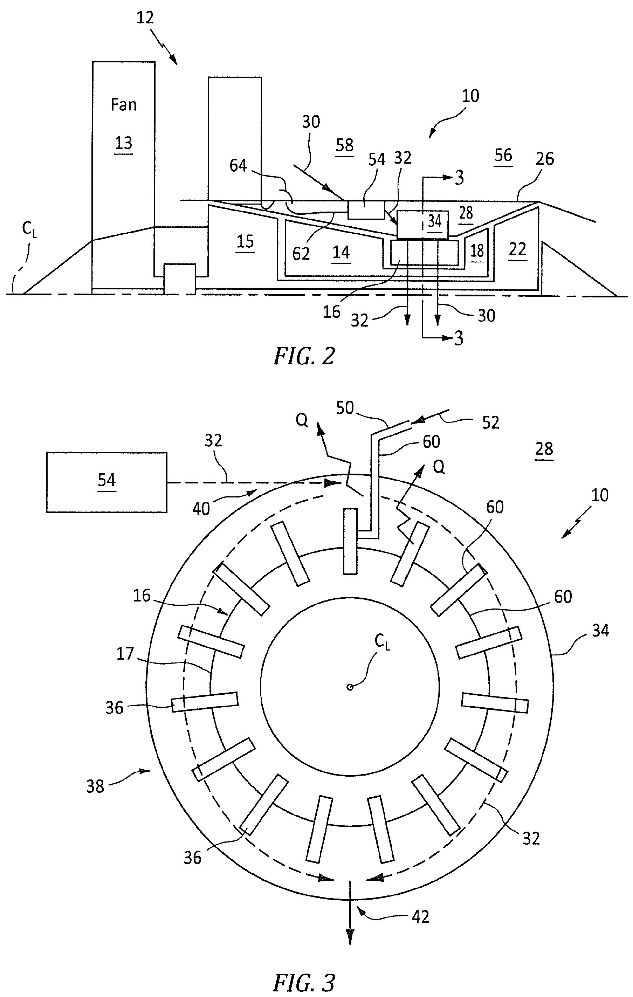

Referring now to Fig. 1 and Fig. 2, the exemplary fuel nozzle thermal management system 10 is shown. The fuel nozzle thermal management system 10 or simply system 10 is shown incorporated within the gas turbine engine 12 having centerline CL. The gas turbine engine 12 includes sections listed from forward toward aft, such as, fan 13, low pressure compressor 15, high pressure compressor (HPC) 14, combustor (COMB) 16, high pressure turbine (HPT) 18, turbine frame 20, low pressure turbine (LPT) 22, and exhaust frame 24.

The nacelle inner flow surface 26 is shown bounding a core compartment 28. The core compartment 28 encloses the above listed gas turbine engine 12 sections. A cooling air flow path 30 (shown as arrows) traverses through the core compartment 28 across the combustor 16 and represents a path that air can travel to provide cooling air 32 for use with the system 10.

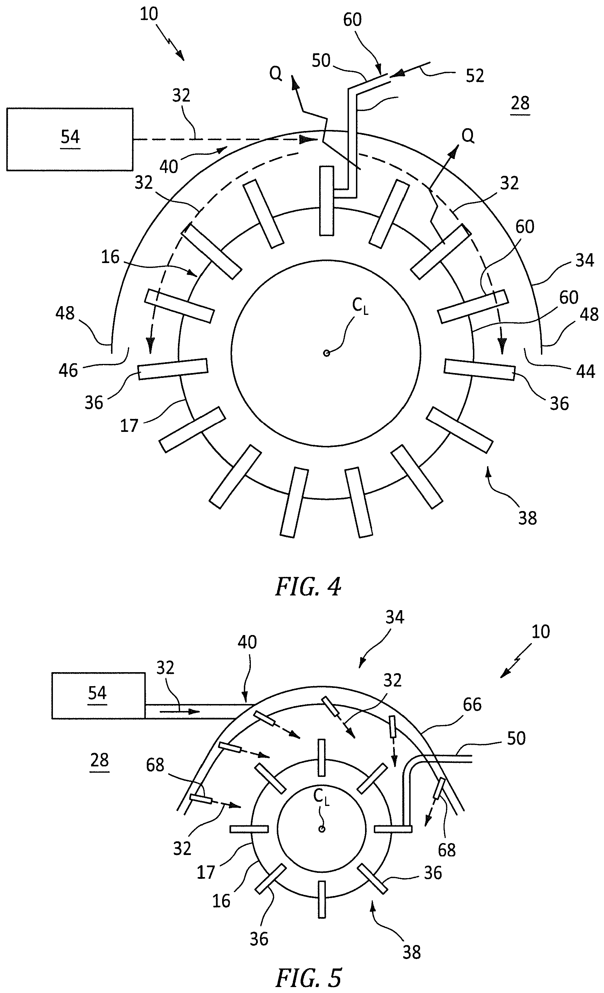

Referring also to Fig. 3 and Fig. 4, viewing the fuel nozzle thermal management system 10 from cut 3-3 of Fig 2. The fuel nozzle thermal management system 10 can include a conditioning duct 34 within the core compartment 28 and surrounding the combustor 16 and its combustor case 17. The conditioning duct 34 is shown as a full hoop encircling the combustor case 17 at Fig. 3. In an exemplary embodiment, the conditioning duct 34 can partially surround the combustor case 17, as shown in Fig. 4. The conditioning duct 34 can be configured to direct the cooling air 32 to contact and/or wash over fuel nozzle(s) 36 arrayed about the combustor 16. The fuel nozzle(s) 36 is shown in an array 38 and extend radially through and outboard from the combustor case 17 relative to the centerline CL.

The conditioning duct 34 can define an air inlet 40 that receives the cooling air 32 flowing into the conditioning duct 34. The conditioning duct 34 can define an air outlet 42 that is configured to discharge the cooling air 32 from within the conditioning duct 34. In the embodiment shown in Fig. 4, there can be a first air outlet 44 and a second air outlet 46 adjacent to the conditioning duct 34 boundary 48 that partially covers the fuel nozzle(s) 36. The conditioning duct 34 can extend axially along the length of the combustor 16 and its combustor case 17. In an alternative embodiment, the conditioning duct 34 can extend axially a predetermined distance less than the full combustor case 17 length. The conditioning duct 34 can completely encircle the combustor case 17 and fuel nozzle(s)36. In an exemplary embodiment, the conditioning duct 34 can partially encircle the combustor case 17 and fuel nozzle(s) 36, a predetermined circumference. The conditioning duct 34 can be configured to direct the cooling air 32 to the warmest regions of the combustor case 17 and fuel nozzle(s) 36 post-shutdown, such as top dead center or more generally the upper half.

A fuel manifold/external fuel supply/fuel drain lines 50 can be located at least partially within or proximate the conditioning duct 34. The fuel manifold/external fuel supply/fuel drain lines 50 can be in operative communication with each of the fuel nozzles 36 to supply fuel 52 to the nozzle(s) 36.

The cooling air 32 can be fluidly coupled with the fuel nozzles 36 and/or the fuel manifold/external fuel supply/fuel drain lines 50. The cooling air 32 can be thermally coupled with the fuel nozzles 36 and/or fuel manifold/external fuel supply/fuel drain lines 50 and/or combustor case 17. The cooling air 32 can pass over the fuel nozzles 36 and remove thermal energy Q from the fuel nozzles 36. The cooling air 32 can pass over the fuel manifold/external fuel supply/fuel drain lines 50 and remove thermal energy Q from the fuel manifold/external fuel supply/fuel drain lines 50. The cooling air 32 can pass over the combustor case 17 and remove thermal energy Q from the combustor 16. The cooling air 32 can be at a lower temperature than the fuel nozzle(s) 36, fuel manifold/external fuel supply/fuel drain lines 50 and combustor case 17.

A fan 54 can be in operative communication with the conditioning duct 34. The fan 54 can blow the cooling air 32 into the conditioning duct 34. The fan 54 can be located within the core compartment 28. The fan 54 can be fluidly coupled with the cooling air 32 taken from an open environment 56 outboard of the core compartment 28, such as with an open rotor/unducted fan architecture. In an exemplary embodiment, the cooling air 32 can be sourced from a fan bypass air stream 58 external to the nacelle inner flow surface 26, such as with a ducted fan architecture. The fan 54 can be configured to enhance the convective cooling properties of the cooling air 32 flowing over external surfaces 60 of the combustor 16, fuel nozzle(s) 36 and/or fuel manifold 50.

In an exemplary embodiment, the fan 54 can be in direct fluid communication with the combustor case 17, fuel nozzle(s) 36 and/or fuel manifold/external fuel supply/fuel drain lines 50. In this embodiment, the fuel nozzle thermal management system 10 can be configured without the conditioning duct 34 to reduce weight and complexity. The fan 54 can be configured to discharge the cooling air 32 directly to the combustor case 17, fuel nozzle(s) 36 and/or fuel manifold/external fuel supply/fuel drain lines 50. The fan 54 can be configured to discharge the cooling air 32 into the locations with the warmest temperatures post-shutdown, such as the top dead center region or top quadrant region where the hot air is most likely to rise post shutdown. The fuel nozzle thermal management system 10 may be adaptatively tailored to mission and outside air temperature needs. In cases when the outside air temperature is low, cooling air 32 flow rates can be adjusted to conserve fan power consumption, for example.

In engine architectures where an electric compressor is used, such as, more electric engines with a bleed boost compressor, the compressor may be used as the fan 54 to flow cooling air 32 into the conditioning duct 34. In addition to fuel system coke management, the engine core compartment 28 can be simultaneously ventilated prior to and/or after engine shutdown further reducing coke risk. An inlet 62 of the fan 54 can be fluidly coupled to the core compartment 28 to enable ventilation of the core compartment 28. In an alternative embodiment, the conditioning duct 34 can be fed by a passive scoop 64 to allow natural convective cooling. In such an embodiment, the direction of the cooling air flow path 30 may be different than what is shown in the figures, cool air may be fed off bottom dead center and vented at top dead center into the core compartment 28 or a cold sink (not shown).

In an exemplary embodiment as shown in Fig. 5, the fuel nozzle thermal management system 10 can be configured with the conditioning duct 34 configured with a circumferential conduit 66 with jets 68 aimed at the nozzles 36 and combustor case 17 and/or fuel manifold/external fuel supply/fuel drain lines 50. The jets 68 can be configured to direct the cooling air 32 toward the areas proximate the fuel nozzle(s) 36, fuel manifold/external fuel supply/fuel drain lines 50 and combustor case 17.

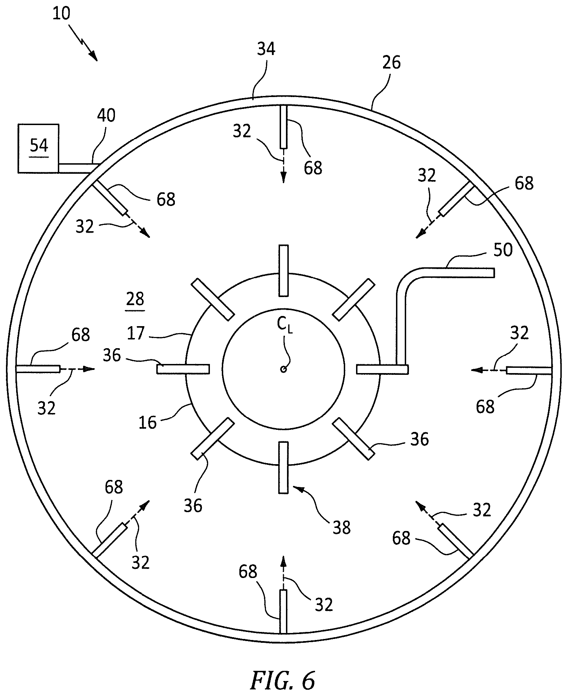

In an exemplary embodiment as shown in Fig. 6, the fuel nozzle thermal management system 10 can be configured with the conditioning duct 34 integrated into the nacelle 26 with jets 68 aimed towards the fuel nozzles 36 and combustor case 17 and/or fuel manifold/external fuel supply/fuel drain lines 50. The jets 68 can be distributed circumferentially around the combustor case 17 in a full array or some form of partial array.

The conditioning duct 34 can be fed cooling air 32 with an electrically driven fan 54 or compressor for post shut down operation, or passively fed using ram air during engine operation.

A technical advantage of the disclosed fuel nozzle thermal management system includes a conditioning duct configured to direct the cooling air to contact and/or wash over fuel nozzles arrayed about the combustor.

Another technical advantage of the disclosed fuel nozzle thermal management system includes a conditioning duct configured to direct the cooling air to contact and/or wash over fuel a manifold/external fuel supply/drain lines arrayed about the combustor.

Another technical advantage of the disclosed fuel nozzle thermal management system includes a fan in operative communication with the conditioning duct for blowing the cooling air into the conditioning duct to cool the combustor and combustor accessories.

Another technical advantage of the disclosed fuel nozzle thermal management system includes the fan configured to discharge the cooling air into the locations with the warmest temperatures post-shutdown, such as the top dead center region or top quadrant region where the hot air is most likely to rise post shutdown.

Another technical advantage of the disclosed fuel nozzle thermal management system includes the fan being fluidly coupled with the cooling air taken from an open environment outboard of the core compartment, such as with an open rotor/unducted fan architectures.

There has been provided a fuel nozzle thermal management system. While the fuel nozzle thermal management system has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A fuel nozzle thermal management system comprising:
a fan fluidly coupled with at least one of a fuel nozzle, a fuel manifold, an external fuel supply, and a fuel drain line proximate a combustor.

2. The fuel nozzle thermal management system according to claim 1, further comprising:
a conditioning duct proximate the combustor, wherein the conditioning duct is configured to direct a cooling air fluidly coupled with the at least one of the fuel nozzle, the fuel manifold, the external fuel supply, and the fuel drain line proximate the combustor.

3. The fuel nozzle thermal management system according to claim 2, wherein the conditioning duct is configured to encircle the combustor, or wherein the conditioning duct partially encircles the combustor.

4. The fuel nozzle thermal management system according to claim 2 or 3, wherein the conditioning duct is configured as a circumferential conduit with at least one jet configured to direct the cooling air toward at least one of the fuel nozzles, the combustor, the fuel manifold, the external fuel supply, or the fuel drain line.

5. The fuel nozzle thermal management system according to any of claims 2 to 4, wherein the conditioning duct is configured integrated into a nacelle with at least one jet configured to direct the cooling air toward at least one of the fuel nozzles, the combustor, the fuel manifold, the external fuel supply, or the fuel drain line.

6. The fuel nozzle thermal management system according to any of claims 2 to 5, wherein the conditioning duct partially encircles the combustor.

7. The fuel nozzle thermal management system according to any of claims 2 to 6, wherein the conditioning duct is configured to be supplied with the cooling air by at least one of an electrically driven fan or compressor during post shut down operation or passively fed using ram air during engine operation.

8. The fuel nozzle thermal management system according to any of claims 1 to 7,
wherein the conditioning duct is fluidly coupled with the fan.

9. The fuel nozzle thermal management system according to claim 8, wherein the conditioning duct comprises an air inlet fluidly coupled with at least one air outlet.

10. A process for fuel nozzle thermal management comprising:
fluidly coupling a fan with at least one of a fuel nozzle, a fuel manifold, an external fuel supply, and a fuel drain line proximate a combustor;
fluidly coupling a conditioning duct proximate the combustor; and
configuring the conditioning duct to direct a cooling air fluidly coupled with the at least one of the fuel nozzle, the fuel manifold, the external fuel supply, and the fuel drain line proximate the combustor.

11. The process according to claim 10, further comprising:
encircling the combustor with the conditioning duct; and/or
further comprising:
partially encircling the combustor with the conditioning duct.

12. The process according to claim 10 or 11, further comprising:
forming an air inlet in the conditioning duct; and
fluidly coupling the air inlet with at least one air outlet.

13. The process according to any of claims 10 to 12, further comprising:
fluidly coupling the air inlet with a source of air taken from at least one of an open environment outboard of a core compartment or taken from a fan bypass air stream external to a nacelle inner flow surface.

14. The process according to any of claims 10 to 13, further comprising:
configuring the conditioning duct as a circumferential conduit with at least one jet; and
directing the cooling air with the jets toward at least one of the fuel nozzles, the combustor, the fuel manifold, the external fuel supply, or the fuel drain line.

15. The process according to any of claims 10 to 14, further comprising:
configuring the conditioning duct integrated into a nacelle with at least one jet; and
directing the cooling air toward at least one of the fuel nozzles, the combustor, the fuel manifold, the external fuel supply, or the fuel drain line.
